# EUROPEAN PATENT APPLICATION

(11) **EP 4 369 651 A1**
(43) Date of publication of application: **15.05.2024**
(21) Application number: 23191601.6
(22) Date of filing: 16.08.2023
(51) Int. Cl.: H04L 9/08, H04L 9/32, H04L 9/40

(54) **METHOD AND APPARATUS FOR CLASSIFYING PACKETS BASED ON USER AUTHENTICATION FOR DIFFERENTIAL SECURITY SERVICE IN SHIP NETWORKS**

(30) Priority: 11.11.2022 KR 20220150123
(71) Applicant: Penta Security Systems, Inc., Seoul 07241 (KR)
(72) Inventor: OH, Jin Hyeok, 14247 Gyeonggi-do (KR); YUN, Keon, 05825 Seoul (KR); YUN, Sun Woo, 10251 Gyeonggi-do (KR); LEE, Sang Min, 07776 Seoul (KR); LIM, Myong Cheol, 01755 Seoul (KR); SIM, Sang Gyoo, 06939 Seoul (KR); KIM, Tae Gyun, 16811 Gyeonggi-do (KR)
(74) Representative: Stöckeler, Ferdinand

(57) **Abstract**

Disclosed is a user authentication-based packet classification method and apparatus for providing differentiated security services in a ship network. A user authentication-based packet classification method includes receiving an authorization code request message from a user terminal including a client, authenticating and authorizing a user of the client based on the authorization code request message, transmitting an authorization code response message to the user terminal in response to the authorization code request message, receiving an access token request message from the user terminal based on the authorization code response message, and transmitting an access token response message including an access token to the user terminal in response to the access token request message.

## Description

### BACKGROUND

### 1. Technical Field

The present invention relates to a user authentication-based packet classification technology, and more particularly, to a user authentication-based packet classification method and apparatus for providing differentiated security services in a ship network.

### 2. Related Art

The need for preparing a security system for the introduction of autonomous vessels in ship networks is rapidly increasing due to the evolving environment in the shipbuilding and maritime port sectors, where cutting-edge digital technologies and artificial intelligence are being applied. In addition, the increasing network connectivity and information sharing between ships and land-based systems, as well as among key systems within ships, have led to a significant rise in the importance of cybersecurity.

In fact, the severity of maritime accidents is over six times greater than that of road accidents, leading to a high risk of secondary damages occurring in the sea, which serves as an evacuation space, in the event of an accident. Since 2017, cyber-attacks on operational technology (OT) systems have increased by 900%. Furthermore, it has been reported that cyber-attacks in the maritime industry overall increased fourfold from February to May 2020.

Given the constrained resources available on ships, there is an urgent need for research on ship-optimized security systems that are specifically designed to operate cybersecurity equipment efficiently. Due to the nature of prolonged navigation in rivers or seas, ships must be designed to operate cybersecurity systems effectively, taking into account the limited network equipment and resources. Therefore, it is necessary to improve the efficiency of existing ground-based systems, including cyber security gateways, for use in ship networks and to integrate the services of evolving next-generation security technologies.

Next-generation security technologies are expanding the scope of security technologies from the network layer to the application layer in a single security product. That is, next-generation security technologies are designed to provide comprehensive integrated security services, rather than just a single service.

However, since not all network packets typically require all security services, it is necessary to enhance efficiency in next-generation security technologies by providing differentiated security services based on user classifications or levels. Furthermore, in addition to simply controlling access to the system, it is also necessary to provide differentiated network and security services based on the security level, sensitivity, and source of the packet. In particular, there is a need to improve the inefficiencies of existing next-generation security technologies, such as redundant checks for repetitive access from the initially allowed addresses.

### SUMMARY

The present invention has been conceived to meet the demands of conventional technology and it is an object of the present invention to provide a user authentication-based packet classification method and apparatus that is capable of improving the operational efficiency of security gateways used in ship network environments.

It is another object of the present invention to provide a user authentication-based packet classification method and apparatus that is capable of supporting differentiated security services through integrated authentication-based packet classification using open standard protocols for authorization.

In order to accomplish the above objects, a user authentication-based packet classification method for differentiated security services of a ship network, performed by a service provider including a processor, according to an aspect of the present invention includes receiving an authorization code request message from a user terminal including a client, authenticating and authorizing a user of the client based on the authorization code request message, transmitting an authorization code response message to the user terminal in response to the authorization code request message, receiving an access token request message from the user terminal based on the authorization code response message, and transmitting an access token response message including an access token to the user terminal in response to the access token request message.

The user authentication-based packet classification method may further include receiving a resource request message including the access token from the user terminal, and transmitting a resource response message including resources or information indicating the resources to the user terminal in response to the resource request message.

The user authentication-based packet classification method may further include referencing a user class management table for providing the differentiated security services based on a user class defined by an extended parameter in the resource request message, and applying a differentiated security service to a packet of the user terminal based on an action corresponding to the user class defined in the user class management table.

The user authentication-based packet classification method may further include changing a processing order of packet data based on a priority queue corresponding to the user class.

The user authentication-based packet classification method may further include receiving client service pre-registration from the client.

The user authentication-based packet classification method may further include defining an extended parameter designating a user class in a hypertext transfer protocol (HTTP) response corresponding to the access token response message of an authorization server of the service provider.

In order to accomplish the above objects, a user authentication-based packet classification apparatus according to another aspect of the present invention includes a memory storing at least one instruction for classifying packets based on user authentication for differentiated security services in a ship network, and a processor connected to the memory and executing the at least one instruction. The processor may be configured, by executing the at least one instruction, to receive an authorization code request message from a user terminal including a client, authenticate and authorize a user of the client based on the authorization code request message, transmit an authorization code response message to the user terminal in response to the authorization code request message, receive an access token request message from the user terminal based on the authorization code response message, and transmit an access token response message including an access token to the user terminal in response to the access token request message.

The processor may be further configured to receive a resource request message including the access token from the user terminal and transmit a resource response message including resources or information indicating the resources to the user terminal in response to the resource request message.

The processor may be further configured to reference a user class management table for providing the differentiated security services based on a user class defined by an extended parameter in the resource request message and apply a differentiated security service to a packet of the user terminal based on an action corresponding to the user class defined in the user class management table.

The processor may be further configured to change a processing order of packet data based on a priority queue corresponding to the user class.

The user class management table may include a class field, a priority field, and an action field. The class field may represent a class tag defined by the service provider. The action field may define a security service type to be executed on the corresponding traffic or a predetermined class-specific action.

The extended parameter may include a user class field defining the user class and priority, a class information field indicating version information of the user class management table, and a constraint field.

In the user authentication-based packet classification apparatus, the processor may be further configured to receive client service pre-registration from the client.

In the user authentication-based packet classification apparatus, the processor may be further configured to define an extended parameter designating a user class in a hypertext transfer protocol (HTTP) response corresponding to the access token response message of an authorization server of the service provider.

### BRIEF DESCRIPTION OF THE DRAWINGS

FIG. 1 is a signal flow diagram illustrating a user authentication-based packet classification method (hereinafter referred to as "packet classification method") for differentiated security services in a ship network according to an embodiment of the present invention;
FIG. 2 is a diagram illustrating exemplary extended parameters of a security gateway employable in the packet classification method of FIG. 1;
FIG. 3 is a diagram illustrating an exemplary priority queue-based data processing process of a security gateway employable in the packet classification method of FIG. 1;
FIG. 4 is a diagram illustrating exemplary details of a packet processing process employable in the priority queue-based data processing process of FIG. 3;
FIG. 5 is a schematic block diagram illustrating a configuration of a user authentication-based packet classification apparatus (hereinafter referred to as "packet classification apparatus") for differentiated security services in a ship network according to another embodiment of the present invention; and
FIG. 6 is a diagram illustrating an exemplary access control procedure for a ship network to which a packet classification apparatus is applicable according to another embodiment of the present invention.

### DETAILED DESCRIPTION OF THE INVENTION

Embodiments of the present disclosure are disclosed herein. However, specific structural and functional details disclosed herein are merely representative for purposes of describing embodiments of the present disclosure. Thus, embodiments of the present disclosure may be embodied in many alternate forms and should not be construed as limited to embodiments of the present disclosure set forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one A or B" or "at least one of one or more combinations of A and B". In addition, "one or more of A and B" may refer to "one or more of A or B" or "one or more of one or more combinations of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, preferred exemplary embodiments of the present disclosure will be described in more detail with reference to the accompanying drawings. The following detailed description is provided merely for illustrative purposes and should not be construed to limit the concept of the present invention to any specific physical configuration. In describing the present disclosure, in order to facilitate an overall understanding, the same reference numerals are used for the same elements in the drawings, and duplicate descriptions for the same elements are omitted.

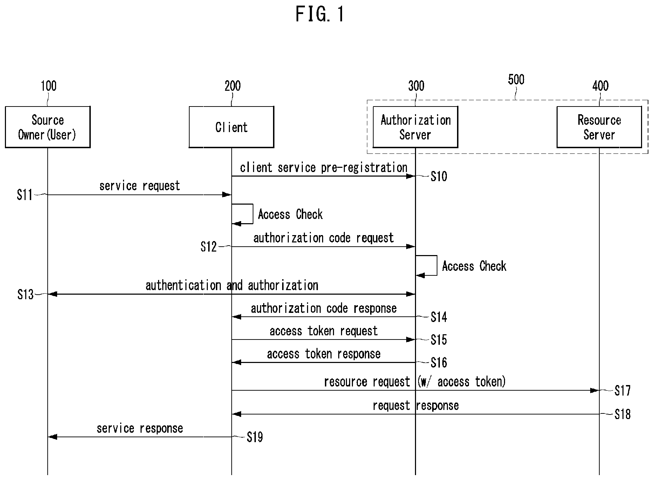

FIG. 1 is a signal flow diagram illustrating a user authentication-based packet classification method (hereinafter referred to as "packet classification method") for differentiated security services in a ship network according to an embodiment of the present invention.

The packet classification method of this embodiment may be implemented through the interaction of a source owner 100, a client 200, an authorization server 300, and a resource server 400.

Here, the source owner 100 may refer to a user located within or outside the ship network corresponding to specific resource or the user terminal used by the user. Examples of the user terminal may include personal computers, personal mobile communication devices, and mobile terminals.

The client 200 may refer to a user terminal, a software means installed on a user terminal to exchange signals and data with the service provider 500 in accordance with a predetermined procedure or protocol, or a hardware component performing the function corresponding to such means.

The source owner 100 and the client 200, which together constitute a user accessing the ship network or other user terminals or data within the ship network, may be collectively referred to as a user terminal.

The authorization server 300 and the resource server 400 may be collectively referred to as a service provider 500 that provides access token-based integrated authentication (single sign-on, SSO) services and user authentication-based packet classification services utilizing the authentication services. The authorization server may be referred to as an authentication server, and the service provider 500 may include a ship network administrator.

With reference to FIG. 1, in the integrated authentication process employable in the packet classification method, the client 200 may perform client service pre-registration with the authorization server 300 at step S10.

Next, the source owner 100 may make a service request to the client 200 at step S11. The client 200 may check the access with the service request from the source owner 100.

Then, the client 200 may request an authorization code from the authorization server 300 at step S12. The authorization server 300 may verify the access for the authorization code request of the client 200.

Next, the authorization server 300 may authenticate the source owner 100 and share authorization information with the source owner 100 through communication at step S13. The authorization server 300 may also send an authorization code response to the client 200 at step S14 in response to the authorization code request.

Subsequently, the client 200 may request, at step S15, an access token from the authorization server 300 based on the authorization code response.

The authorization server 300 may send an access token response to the client 200 at step S16 in response to an access token request. The access token response message may include extended parameters. The extended parameters include the definition of authorization server parameters capable of the management of user classifications for the operation of differentiated security services. The extended parameters may be defined in the body of a hypertext transfer protocol (HTTP) response.

Next, the client 200 may request resources from the resource server 400 at step S17 based on the authenticated user and corresponding permissions indicated by the extended parameters in the access token. The resource request message may include the access token.

Next, the resource server 400 may send a request response message to the client 200 at step S18 in response to the resource request message including the access token from the client 200. The request response may include the requested resources.

Next, the client 200 may send the request response message received from the resource server 400 or a corresponding service response to the source owner 100. The service response message may include the resources or information on the resources.

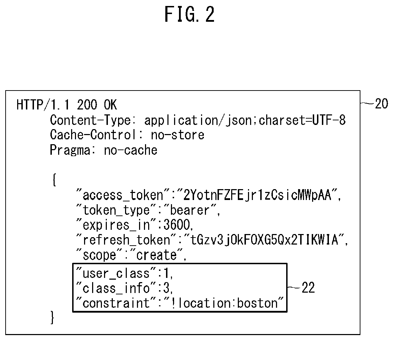

FIG. 2 is a diagram illustrating exemplary extended parameters of a security gateway employable in the packet classification method of FIG. 1.

In the embodiment of FIG. 2, the authorization server may issue a valid access token in response to the access token request from the client. In this case, the authorization server may define extended parameters 22 in the access token included in the access token response message 20.

The access token response message 20 may be formatted as an HTTP response message. For example, the access token response message 20 may include a status line, a header, and a body, and the extended parameters 22 may be defined as a form added to the body.

For example, in this embodiment, the status line of the access token response message 20 is displayed as "Content-Type: application/j son;charset=UTF-8," the header is displayed as "Cache-Control: no-store" and "Pragma: no-cache" in two separate lines, and the body, including the extended parameters 22, is displayed in eight lines.

Five lines of the body may be displayed in the following order.
" acces s_token":" 2 YotnFZFEj r 1 zC si cMWp A A",
"token-type": "bearer",
"expires _in":3600,
"refresh_token": "tGzv3JOkF0XG5Qx2TIKWIA",
"scope": "create",

The remaining three lines of the extended parameters 22 in the body may be defined as follows.
"user _class":1,
"class_info":3,
"constraint" : "!location:boston"

Among the items of the extended parameters 22, the user class defines the user classification and priority and determines the action based on the return value of the class tag from the user class management table defined in the authorization server.

Additionally, among the items of the extended parameters 22, the class information (class info.) defines the version information of the user class management table, which determine the class value of the user class, and is designed to support the management of grade updates according to the latest grade table.

Additionally, among the items of the extended parameters 22, the constraint defines additional requirements or conditions that need to be met and specifies the details of the constraints that need to be additionally complied with in addition to the user class information defined in the user class.

According to this embodiment, it is possible to define and utilize extended parameters for user class management in order to provide differentiated security services based on user authentication. That is, in order to operate and manage security services differentially based on user classification in a security gateway that provides multiple security services such as unified threat management (UTM), extended parameters are defined and utilized in this embodiment.

In the following, a more detailed description is made of the user classification management table for providing the differentiated security services.

A ship network administrator, as a service provider, may define a classification management field in advance for managing users accessing the network. This means that the authorization server may define or equip a classification management table to handle the management of access control levels for users. For instance, the authorization server may have a predefined list for specific users who do not require additional security checks.

Additionally, the authorization server may construct a classification table based on Internet protocol (IP) addresses, port numbers, and protocols in accordance with the security requirements of the service provider.

The user classification management table may encompass fields such as source address, source port, destination address, destination port, protocol, class or return value, priority, and action.

Table 1 represents an exemplary user classification management table structured with fields and descriptions, and examples corresponding to the fields.

**[Table 1]**

| field | description | example |
|---|---|---|
| source address | source address range | x.x.x.0∼ x.x.x.255 |
| source port | source port range | 80 |
| destination address | destination address range | x.x.x.0∼ x.x.x.255 |
| destination port | destination port range | 80 |
| protocol | transmission protocol type | TCP |
| class | user class | 1 |
| priority | Priority of corresponding traffic | 1 |
| action | definition of class-specific action | Firewall, IDS, etc. |

In Table 1, the "class" field may be defined by the service provider as a "class tag" that indicates the user class. For example, when the return value of the class tag is 0, the class may be defined as a basic state without assigned priority and, in this case, all security services are executed for all user traffic. Additionally, when the return value of the class tag is a positive number such as 1, the corresponding class may be used to define user priority and behavior based on the security requirements of the service provider.

Furthermore, in Table 1, the "action" field may be used to define the predetermined class-specific actions, such as firewall, intrusion detection system (IDS), etc., which should be applied to the corresponding traffic.

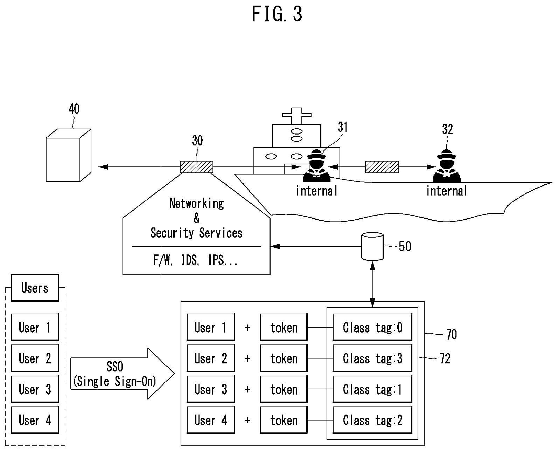

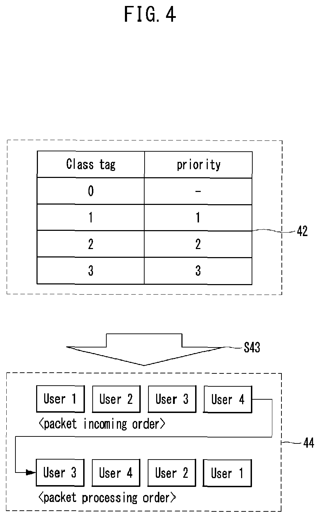

FIG. 3 is a diagram illustrating an exemplary priority queue-based data processing process of a security gateway employable in the packet classification method of FIG. 1. FIG. 4 is a diagram illustrating exemplary details of a packet processing process employable in the priority queue-based data processing process of FIG. 3.

In this embodiment, the security gateway may be at least part of the service provider or ship network administrator.

With reference to FIG. 3, the security gateway 30 is installed between the external user 40 and the ship network and between the internal users 31 and 32 of the ship network to provide networking and security services and processing data based on a priority queue. In addition, the security gateway 30 may be connected to a predetermined server 50 within the ship network. The predetermined server 50 may be referred to as a business server and may be at least part of the ship network administrator.

The business server 50 may have a user interface 70 that returns a class tag 72 based on the user classification management table. The user interface 70 may be configured to support unified authentication (single sign-on, SSO) for users within or outside the ship. The users may include user 1, user 2, user 3, and user 4.

The user interface 70 may generate and return the user's class tag based on the access token granted to the user after successful user authentication through integrated authentication.

In this embodiment, the class tag for user 1 is exemplified as 0, for user 2 as 3, for user 3 as 1, and for user 4 as 2.

In this scenario, the business server 50 may process the data or packets based on the preconfigured or pre-stored class tag-based priority list 42 as denoted by S43 in FIG. 4. That is, the packet processing order may be different from the listed order of user 1 packet, user 2 packet, user 3 packet, and user 4 packet depending on the packet processing, i.e., the packets may be processed in the order of user packet 3, user packet 4, user packet 2, and user packet 1.

In this way, the business server 50 may perform tasks, such as processing data in the ship network, based on the class tags. The business server 50 can sequentially process multiple services, while the router or switch operating as the security gateway 30 in the ship network may check and process whether to allow the passage of user-specific packets or prioritize the passage of the packets based on the class tag information.

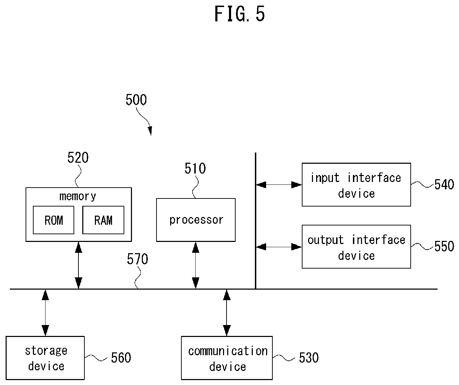

FIG. 5 is a schematic block diagram illustrating a configuration of a user authentication-based packet classification apparatus (hereinafter referred to as "packet classification apparatus") for differentiated security services in a ship network according to another embodiment of the present invention.

With reference to FIG. 5, the packet classification apparatus 500 may be composed of at least some functional components or modules of the service provider or ship network administrator. The service provider or ship network administrator may be part of the functionality or configuration of the business server, and depending on the implementation, it may be equipped with the functionality of a router or switch within the ship network or implemented as a specific router or switch.

The packet classification apparatus 500 may include at least one processor 510, a memory 520, and a communication device 530 connected to the security gateway installed on the router or switch of the ship network. Additionally, the packet classification apparatus 500 may include an input interface device 540, an output interface device 550, and a storage device 560. Each of the components included in the packet classification apparatus 500 may communicate with each other through a bus 570.

In addition, the components included in the packet classification apparatus 500 may be connected through individual interfaces or buses centered on the processor 510 rather than the common bus 570. For example, the processor 510 may be connected to at least one of the memory 520, the communication device 530, the input interface device 540, the output interface device 550, and the storage unit 560 via a dedicated interface.

The processor 510 may refer to a central processing unit (CPU), a graphics processing unit (GPU), or a dedicated processor on which the methods according to embodiments of the present invention are performed.

Each of the memory 520 and the storage device 560 may be configured as at least one of a volatile storage medium and a non-volatile storage medium. For example, the memory 520 may be configured as at least one of read-only memory (ROM) and random access memory (RAM).

The communication device 530 may include a sub-communication system for communication with the security gateway. The sub-communication system may be configured to support a wired and/or wireless communication protocol.

The input interface device 540 may include an input signal processing unit that maps, to a pre-stored instruction, or processes a signal input through at least one input means selected among input means such as a keyboard, a microphone, a touch pad, and a touch screen.

The output interface device 550 may include an output signal processing unit mapping, to a pre-stored signal form or level, or processing a signal output under the control of the processor 510 and at least one output means outputting a signal or information in the form of vibration or light according to a signal of the output signal processing unit. The at least one output means may include at least one selected among output means such as a speaker, a display device, a printer, an optical output device, and a vibration output device.

The processor 510 may execute program commands stored in at least one of the memory 520 and the storage device 560. The program commands may include at least one command according to the access token-based integrated authentication process (refer to FIG. 1) and at least one command according to the priority queue-based data processing process (refer to FIGS. 3 and 4).

In the packet classification apparatus 500 of this embodiment, the authentication framework of the open standard protocol for authorization, such as the Request for Comments (RFC) 6749 standard for "The OAuth 2.0 Authorization Framework" published by the Internet Engineering Task Force (IETF), may be extended to define class tags for user class management. For example, the operating efficiency of a cybersecurity gateway can be improved by further defining extended parameters for providing differentiated security services within the HTTP response entity-body of the authorization server defined in the existing OAuth 2.0 IETF RFC 6749.

The present invention is also advantageous in terms of facilitating the design of the operational functions of user authentication-based differentiated security services and allowing for the efficient definition of the functionalities of security gateways for user classification management in ship networks.

The present invention is also advantageous in terms of effectively performing predefined actions for differentiated security services by defining extended parameters capable of differentiating users in tokens issued through single sign-on (SSO) for ship network users, based on the user classification management table including settings for actions determined by user classifications defined according to the security requirements of individual ship systems.

The present invention is also advantageous in terms of conserving resources by providing differentiated security services based on user classifications in a resource-constrained ship network environment and improving the speed of security response by accurately and quickly detecting packets through a priority queue-based data processing process according to user classifications.

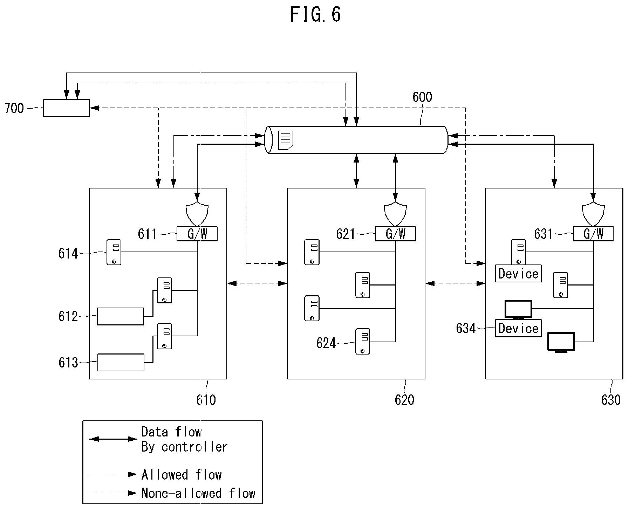

FIG. 6 is a diagram illustrating an exemplary access control procedure for a ship network to which a packet classification apparatus is applicable according to another embodiment of the present invention.

With reference to FIG. 6, the ship network may be configured to include a device (hereinafter referred to as "access control device") 600 for access control between sub-networks within the ship. The sub-networks within the ship may include an operational technology (OT) network 610, an information technology (IT) network 620, and a crew network 630.

The OT network 610 may include a first gateway (G/W) 611, a plurality of user devices 614, a sensor 612 connected to a predetermined user device, and an actuator 613 connected to a predetermined user device. The IT network 620 may include a second gateway (G/W) 621 and a plurality of user devices 624. The crew network 630 may include a third gateway (G/W) 631 and a plurality of user devices 634.

The access control device 600 may be implemented as a user authentication-based network control device to control the data traffic between the sub-networks within the ship, and it may be installed at the top level of the sub-networks. In detail, the access control device 600 may be implemented as a computing device for the service provider or ship network administrator, providing user authentication-based differentiated security services when exchanging data between the OT network 610, IT network 620, crew network 630, and external users.

For example, the access control device 600 form an allowed data flow for packet data in a differentiated security service environment (refer to "data flow by controller") by controlling the security gateway (G/W) based on user authentication and the access token granted after authentication when there is access to a specific sub-network by an external network 700 or an internal user within the ship. The access control device 600 may also operate to block the passage of packets that have failed user authentication or deny access to the corresponding sub-network, ensuring that no unauthorized data flow (none-allowed flow) occurs.

The OT network 610, IT network 620, and crew network 630 may be connected to the ship network access control device (hereinafter referred to as access control device 600) or the user authentication-based network access control channel, which is controlled by the control of the access control device 600, via the respective gateways 611, 621, and 631.

The present invention is advantageous in terms of enhancing packet detection and response speed and improving the network resource utilization efficiency by providing differentiated security services through integrated authentication-based packet classification using open standard protocols for authentication.

The present invention is also advantageous in terms of facilitating the design of the operational functions of user authentication-based differentiated security services and allowing for the efficient definition of the functionalities of security gateways for user classification management in ship networks.

The present invention is also advantageous in terms of effectively performing predefined actions for differentiated security services by defining extended parameters capable of differentiating users in tokens issued through single sign-on (SSO) for ship network users, based on the user classification management table including settings for actions determined by user classifications defined according to the security requirements of individual ship systems.

The present invention is also advantageous in terms of conserving resources by providing differentiated security services based on user classifications in a resource-constrained ship network environment and improving the speed of security response by accurately and quickly detecting packets through a priority queue-based data processing process according to user classifications.

The operation of the method according to an embodiment of the present invention may be implemented as a computer-readable program or code on computer-readable recording media. Computer-readable recording media include all types of recording devices in which information readable by a computer system is stored. The computer-readable recording media may also be distributed in a network-connected computer system to store and execute computer-readable programs or codes in a distributed manner.

The computer-readable recording medium may also include a hardware device specially configured to store and execute program instructions, such as a read only memory (ROM), a random access memory (RAM), and a flash memory. The program instructions may include not only machine language codes such as those generated by a compiler, but also high-level language codes that executable by a computer using an interpreter or the like.

Although some aspects of the present invention have been described in the context of an apparatus, it may also represent a description according to a corresponding method, wherein a block or apparatus corresponds to a method step or feature of a method step. Similarly, aspects described in the context of a method may also represent a corresponding block or item or a corresponding device feature. Some or all of the method steps may be performed by (or using) a hardware device, e.g., a microprocessor, a programmable computer, or an electronic circuit. In some embodiments, one or more of the most important method steps may be performed by such an apparatus.

In embodiments, a programmable logic device (e.g., a field programmable gate array) may be used to perform some or all of the functions of the methods described herein. In embodiments, a field-programmable gate array may operate in conjunction with a microprocessor to perform one of the methods described herein. In general, the methods are preferably performed by some hardware device.

Although described above with reference to the preferred embodiments of the present invention, it should be understood that those skilled in the art can variously modify and change the present invention within the scope without departing from the scope of the present invention as set forth in the claims below.

## Claims

1. A user authentication-based packet classification method for differentiated security services of a ship network, performed by a service provider including a processor, the method comprising:
receiving an authorization code request message from a user terminal including a client;
authenticating and authorizing a user of the client based on the authorization code request message;
transmitting an authorization code response message to the user terminal in response to the authorization code request message;
receiving an access token request message from the user terminal based on the authorization code response message; and
transmitting an access token response message including an access token to the user terminal in response to the access token request message.

2. The method of claim 1, further comprising:
receiving a resource request message including the access token from the user terminal; and
transmitting a resource response message including resources or information indicating the resources to the user terminal in response to the resource request message.

3. The method of claim 2, further comprising:
referencing a user class management table for providing the differentiated security services based on a user class defined by an extended parameter in the resource request message; and
applying a differentiated security service to a packet of the user terminal based on an action corresponding to the user class defined in the user class management table.

4. The method of claim 3, further comprising changing a processing order of packet data based on a priority queue corresponding to the user class.

5. The method of claim 3, wherein the user class management table comprises a class field, a priority field, and an action field, the class field representing a class tag defined by the service provider, the action field defining a security service type to be executed on the corresponding traffic or a predetermined class-specific action.

6. The method of claim 3, wherein the extended parameter comprises a user class field defining the user class and priority, class information field indicating version information of the user class management table, and a constraint field.

7. The method of claim 1, further comprising defining an extended parameter designating a user class in a hypertext transfer protocol (HTTP) response corresponding to the access token response message of an authorization server of the service provider.

8. A user authentication-based packet classification apparatus comprising:
a memory storing at least one instruction for classifying packets based on user authentication for differentiated security services in a ship network; and
a processor connected to the memory and executing the at least one instruction,
wherein the processor is configured, by executing the at least one instruction, to receive an authorization code request message from a user terminal including a client, authenticate and authorize a user of the client based on the authorization code request message, transmit an authorization code response message to the user terminal in response to the authorization code request message, receive an access token request message from the user terminal based on the authorization code response message, and transmit an access token response message including an access token to the user terminal in response to the access token request message.

9. The apparatus of claim 8, wherein the processor is further configured to receive a resource request message including the access token from the user terminal and transmit a resource response message including resources or information indicating the resources to the user terminal in response to the resource request message.

10. The apparatus of claim 9, wherein the processor is further configured to reference a user class management table for providing the differentiated security services based on a user class defined by an extended parameter in the resource request message and apply a differentiated security service to a packet of the user terminal based on an action corresponding to the user class defined in the user class management table.

11. The apparatus of claim 10, wherein the processor is further configured to change a processing order of packet data based on a priority queue corresponding to the user class.

12. The apparatus of claim 10, wherein the user class management table comprises a class field, a priority field, and an action field, the class field representing a class tag defined by the service provider, the action field defining a security service type to be executed on the corresponding traffic or a predetermined class-specific action.

13. The apparatus of claim 10, wherein the extended parameter comprises a user class field defining the user class and priority, a class information field indicating version information of the user class management table, and a constraint field.

14. The apparatus of claim 8, wherein the processor is further configured to receive client service pre-registration from the client.

15. The apparatus of claim 8, wherein the processor is further configured to define an extended parameter designating a user class in a hypertext transfer protocol (HTTP) response corresponding to the access token response message of an authorization server of the service provider.
